# EUROPEAN PATENT SPECIFICATION

(11) **EP 2 829 801 B1**
(45) Date of publication and mention of the grant of the patent: **22.03.2017**
(21) Application number: 13192517.4
(22) Date of filing: 12.11.2013
(51) Int. Cl.: F23G 5/027, C02F 11/10, C10B 47/02, B09B 3/00

(54) **A method of pyrolysis (thermal decomposition) of a solid bulk organic waste and a reactor for performing the method**
Verfahren und Reaktor zur Pyrolyse (thermische Zersetzung) von organischen Feststoffabfällen
Procédé et réacteur pour la pyrolyse (décomposition thermique) de déchets organiques solides

(30) Priority: 22.07.2013 CZ 20130578
(43) Date of publication of application: 28.01.2015
(73) Proprietor: AZ ECO Energy, spol. s r.o., 142 00 Praha 4 (CZ)
(72) Inventor: Mehraliyev, Ali, Dr. Ing., Sumgait (AZ); Hasanov, Hamid, Chanlár (AZ); Hasanov, Shahsultan, Chanlár (AZ); Muradov, Mahal, Dr.Ing., Sumgait (AZ); Talibov, Asker, Sumgait (AZ); Mursalov, Shamil, Baku (AZ); Aliyev, Vugar, Sumgait (AZ)
(74) Representative: Musil, Dobroslav

(56) References cited:
- WO-A1-83/00046
- JP-A- 2001 240 871
- US-A- 4 212 732
- US-A- 5 109 918

## Description

### Technical field

The invention relates to a method of pyrolysis of solid bulk organic waste, particularly sewage sludge and sludge from biogas plants, etc.

The invention also relates to a reactor for performing the method.

### Background art

Sewage sludge is a product of technological processes of waste water treatment in municipal sewerage plants. It is heterogeneous suspension of organic and inorganic substances, which contain, among others, number of microorganisms (bacteria, fungi, molds, yeasts, etc.), some higher organisms (protozoones, wheel animalcules, nematode worms, etc.) and also various trace elements, including residues of some chemical substances (drugs, hormones, pesticides, surface-active substances, etc.).

Sludge from biogas plants is a product of controlled aerobic or anaerobic bacterial decomposition of organic waste and energy crops. It is solid, mostly organic material, which has higher pH (normally 7 to 8) and which contains, apart from residues of various chemical substances, relatively large quantity of nitrogen, phytopathogenic plant seeds, as well as some microorgasms living in it, such as the pathogen of potato wart disease (*Synchytrium endobioticum*), etc.

Therefore, due to their composition, these materials constitute a hazardeous organic waste, which is serious hazard not only to the environment, but also to health of people and animals. In the Czech Republic alone, more than 200,000 tons of sewage sludge is produced, and the costs of their storage and manipulation represent more than one half of the total costs of waste water treatment. However, nowadays there is no universal method for efficient and at the same time ecological utilization or disposal of these materials - larger part of them is, in spite of what has been mentioned above, used as an organic fertilizer, smaller part is incinerated or gasified.

For gasification of these materials, as well as of other types of biomass, a reactor for pyrolysis was proposed in the patent RU 2393200, based on the counter flow principle, in which to the gasified material is delivered a flow of heat transfer gas medium, heated by burning technological fuel in the lower section of the reactor. The disadvantage of this solution is that due to the construction of the reactor steam and gas products of pyrolysis blend with the heat transfer gas medium, and so the steam and gas products generated by the pyrolysis are diluted and polluted, and consequently their energetic properties decrease, reducing possibilities of their further utilization (e.g. combustion).

From JP 2001 240871 is known a method and apparatus for thermal decomposition of plastics. The apparatus contains a thermal decomposition chamber with heating means arranged externally around it, while in the bottom part of the thermal decomposition chamber, there is arranged an agitation blade for agitation of the melt of the material being decomposed. Next to this, there is also an air supply means with a bubbler arranged below the surface of the melted material to supply air into the melt. Given amount of the material to be pyrolysed is put into the inner space of the thermal decomposition chamber and rest there almost without any moving until the pyrolysis is finished. This metod and apparatus are designed for thermal decomposition of plastics which during decomposition melt, and is not suitable for thermal decomposition of solid bulk organic waste.

The goal of the invention is therefore to propose a method of pyrolysis of solid bulk organic waste, especially sewage sludge from municipal sewerage plants, and sludge from biogas plants etc., and a reactor for performing this method, which would eliminate the drawbacks of so far known methods and reactors designed for this or similar purpose, and, in addition which would be economically advantageous and energetically self-sufficient.

### Principle of the invention

The goal of the invention is achieved by a method of pyrolysis of solid bulk organic waste, especially sewage sludge and sludge from biogas plants, in a reactor, in which solid bulk organic waste is fed to the reaction space of the reactor, around which is arranged a heated hollow casing of the reaction space, which constitutes the duct of the heat transfer medium, separated from the inner space of the reactor. As the solid bulk organic waste passes through this reaction space, the process of pyrolysis takes place, whereby the movement of solid bulk organic waste subsequently fed to the reaction space is decelerated by a counterflow of steam and gas products generated by the pyrolysis of the preceding solid bulk organic waste. In this manner it is possible to achieve high efficiency of pyrolysis, without blending or diluting steam and gas products of the pyrolysis with the heat transfer medium, and these are suitable for further utilization without taking other technological steps.

Further increase in pyrolysis efficiency can be achieved if solid bulk organic waste is, prior to being fed to the reaction space of the reactor, fed to a skew and/or curved heated surface, on which it forms a moving layer, and on which it is pre-heated and at the same time its partial pyrolysis takes place.

It is possible to achieve further increase in efficiency if solid bulk organic waste is, after being led from the outlet of the reaction space, fed to a skew and/or curved heated surface, on which it forms a moving layer, on which its final pyrolysis takes place. Moreover, it is advantageous if steam and gas products of the final pyrolysis enter the reaction space of the reactor in order to further decelerate the movement of the solid bulk organic waste.

The goal of the invention is also achieved by a reactor for pyrolysis of solid bulk organic waste, especially sewage sludge and sludge from biogas plants, in whose inner space there is a reaction space, arranged around which is heated hollow casing of the reaction space, which is connected to an inlet of the heat transfer medium to the reactor and with an outlet of the heat transfer medium from the reactor and which is closed towards the inner space of the reactor, in order to avoid blending of the steam and gas products of the pyrolysis with the heat transfer medium.

For the purpose of increasing efficiency, in a direction of the movement of the solid bulk organic waste in the inner space of the reactor behind the reaction space there is arranged a lower chamber, which contains at least one heated skew and/or curved surface sloping at least partially towards the outlet of the solid bulk organic waste from the reaction space and which is directly connected to the inlet of the heat transfer medium to the reactor and to the outlet of the heat transfer medium from the reactor, or it is connected to the inlet of the heat transfer medium to the reactor and/or to the outlet of the heat transfer medium from the reactor via the hollow casing of the reaction space. This chamber is at the same time closed towards the inner space of the reactor, in order to avoid blending the steam and gas products of the pyrolysis with the heat transfer medium.

Preferably, the heated skew and/or curved surface of the lower chamber is formed by surface in the shape of a conical surface, a cone, a truncated cone or a truncated cone with skew upper base.

In order to further increase the efficiency of pyrolysis, in a direction of the movement of the solid bulk organic waste in the inner space of the reactor in front of the reaction space there is arranged an upper chamber, which contains at least one heated skew and/or curved surface facing at least partially towards the feeder of the solid bulk organic waste to the reaction space, and which is directly connected to the outlet of the heat transfer medium from the reactor and to the inlet of the heat transfer medium to the reactor, or, as the case may be, it is connected to the inlet of the heat transfer medium to the reactor and/or to the outlet of the heat transfer medium from the reactor via the hollow casing of the reaction space and/or of the lower chamber. This chamber is at the same time closed towards the inner space of the reactor, so as to avoid blending the steam and gas products of the pyrolysis with the heat transfer medium.

Preferably, the heated skew and/or curved surface of the upper chamber is formed by surface in the form of a conical surface, a truncated cone or a truncated cone with skew upper base.

In another variant of embodiment of the reactor according to the invention the upper chamber, which contains at least one heated skew and/or curved surface facing at least partially towards the feeder of the solid bulk organic waste to the inner space of the reactor is located at least partially in the reaction space of the reactor. Preferably, its heated skew and/or curved surface is formed by surface in the shape of a conical surface, a truncated cone or truncated cone with skew upper base..

In addition, the upper chamber, arranged in this manner, does not have to be connected to the inlet and, consenquently also with the outlet of the heat transfer medium to the reactor, as is heated indirectly by the heat transfer from the hollow casing of the reaction space. So as to improve the efficiency of its heating, however, it can be connected to the outlet of the heat transfer medium from the reactor and to the inlet of the heat transfer medium to the reactor, this being done either directly, or with at least one of them via the hollow casing of the reaction space and/or the lower chamber. In that case the upper chamber has to be closed towards the inner space of the reactor, so as to avoid blending the steam and gas products of the the pyrolysis with the heat transfer medium.

In this arrangement it is also advantageous if around at least part of the height of the upper chamber there is arranged a funnel of solid bulk organic waste, by whose outlet a deflector of the flow of the steam and gas products of pyrolysis is mounted, which prevents the steam and gas products of pyrolysis from entering the funnel of the solid bulk organic waste and from decelerating its movement in it.

In the case when for constructional or technological reasons a free space is created between the outer wall of the hollow casing of the reaction space and the inner wall of the casing of the reactor, it is advantageous if this space is at least partially blinded and/or filled with suitable heat-insulating material.

### Description of drawings

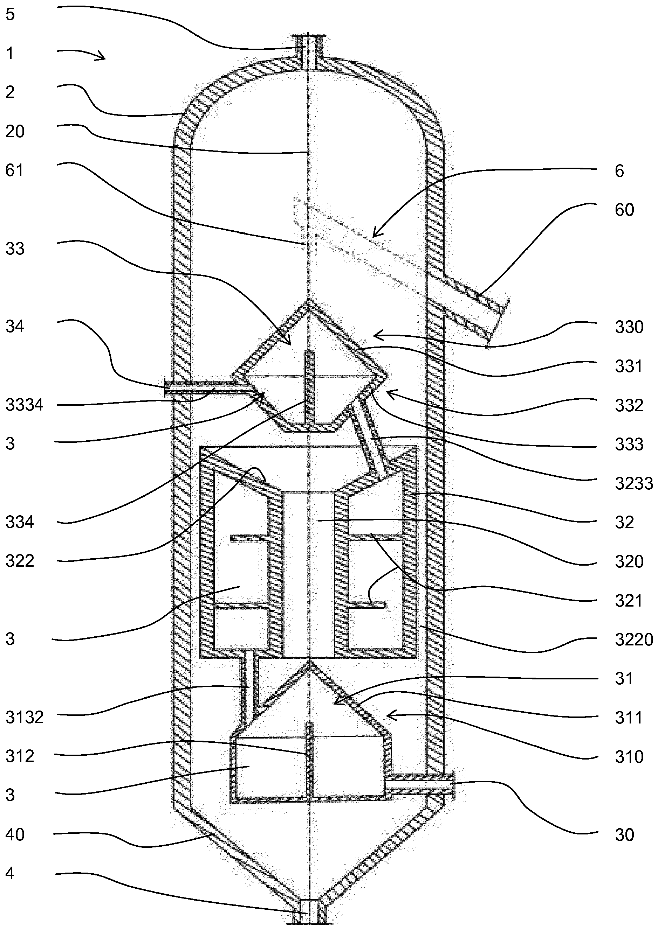

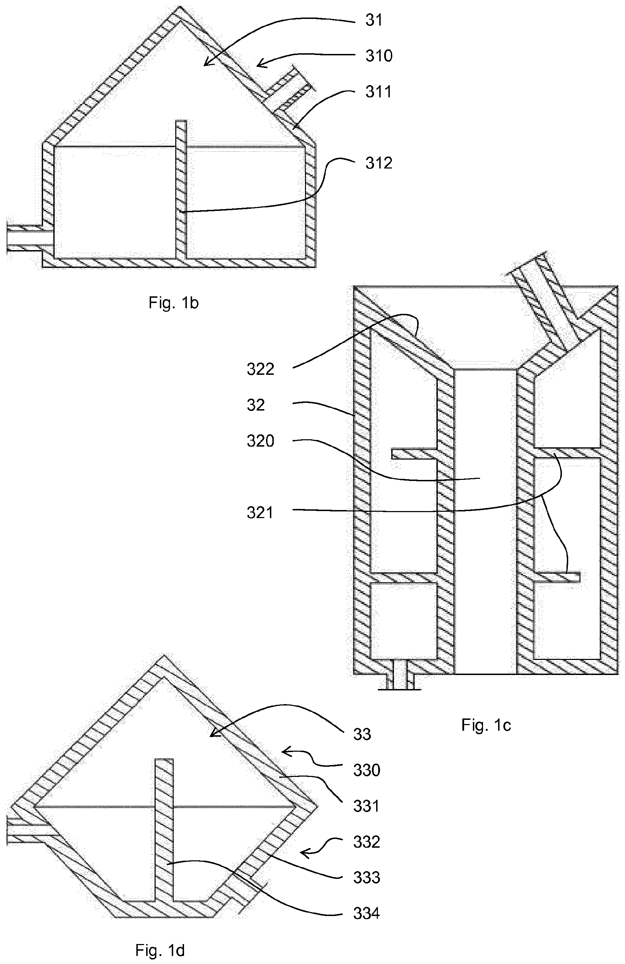

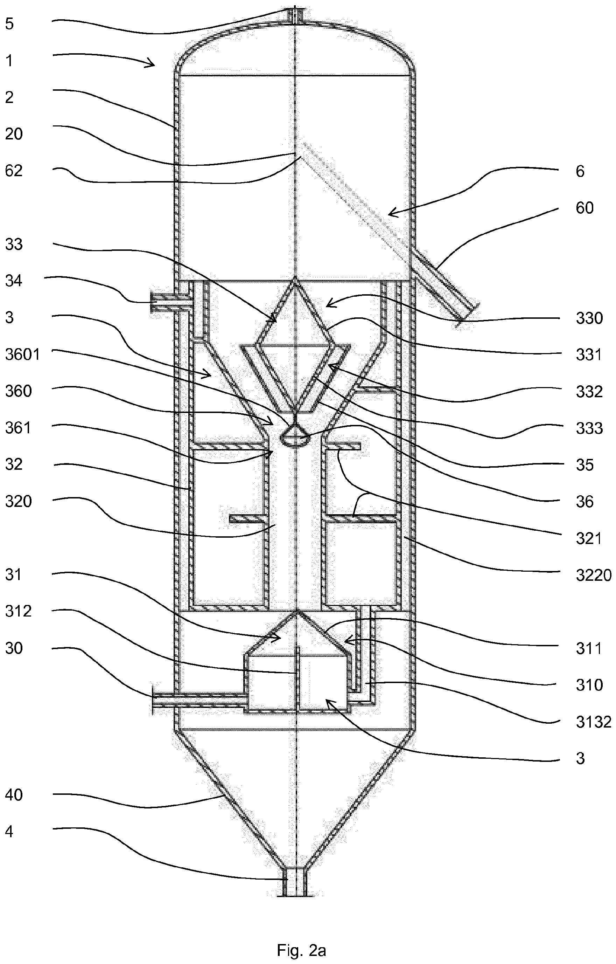

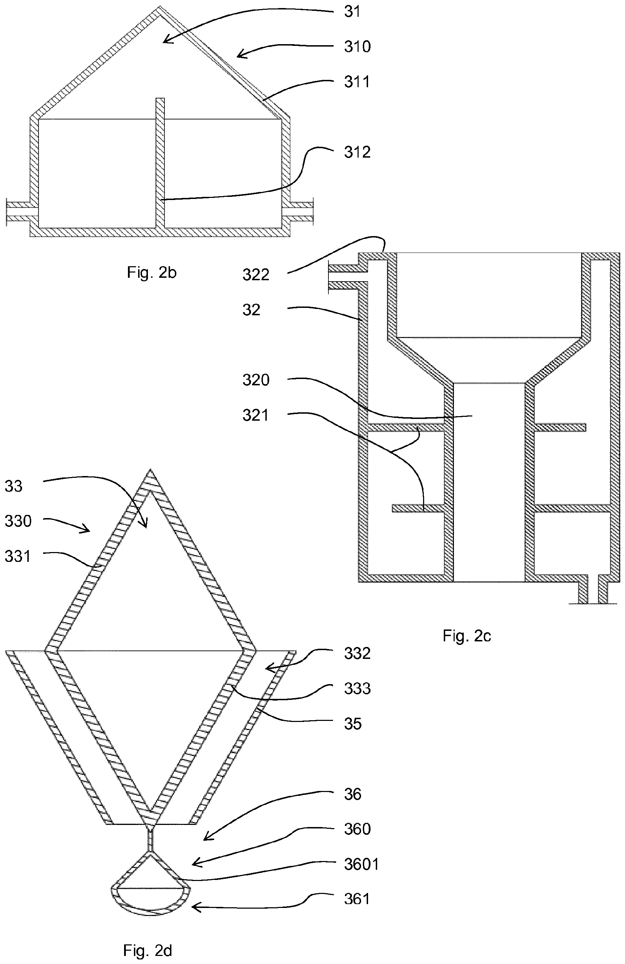

In the enclosed drawing Fig. 1a schematically represents a section of the first example of embodiment of the reactor for performing pyrolysis of solid bulk organic waste according to the invention, Fig. 1b to 1d sections of individual elements mounted in the inner space of the reactor in the embodiment according to Fig. 1a, Fig. 2a a section of the second example of embodiment of the reactor for performing pyrolysis of solid bulk organic waste according to the invention, and Fig. 2b to 2d cestions of individual elements mounted in the inner space of the reactor in the embodiment according to Fig. 2a.

### Specific description

A method of pyrolysis of solid bulk organic waste, sewage sludge and sludge from biogas plants will be explained on two examples of embodiment of a reactor for performing this method shown in Fig. 1a and 2a. However, it can be also performed in reactors of different construction under certain conditions, which will be described below.

The reactor **1** for the pyrolysis of solid bulk organic waste, especially sewage sludge and sludge from biogas plants according to the invention shown in Fig. 1a and 2a contains a cylindrical steel casing **2**, in which the duct **3** of a heat transfer medium is mounted, the duct being separated from the inner space of the reactor **1**. The casing **2** of the reactor **1** is in both shown embodiments in its lower portion skewed towards the outlet **4** of solid products of pyrolysis, its walls forming a conic hopper **40** here, and its upper portion is curved towards the outlet **5** of steam and gas products of pyrolysis, which is preferably located in its uppermost position. In the upper section of the reactor **1** is to the inner space through its casing **2** introduced the feeder **6** of solid bulk organic waste, which is in the illustrated embodiments created as a feeder duct **60** ended in the embodiment shown in Fig. 1a at the level of the vertical axis **20** of the casing **2** of the reactor **1** by a vertical section **61**, and in the embodiment shown in Fig. 2a in proximity of this axis **20** by an overfall **62**. Also, in both embodiments this feeder **6** is in the inner space of the reactor **1** led askew upwards under an angle of 45°, which prevents unwanted intrusion of steam and gas products of pyrolysis through this feeder **6** outside the reactor **1**. In other not shown embodiments the angle of the duct of the feeder **6** of the solid bulk organic waste can be in principle of any size, especially greater, whereby the feeder **6** may be also formed and/or ended, or may lead into the inner space of the reactor **1** in any other known method and/or in a different place - for example it may even be introduced through the curved upper part of the casing **2** of the reactor **1**. The feeder **6** of the solid bulk organic waste is provided with suitable not shown conveyor, preferably a screw conveyor, for example.

The duct **3** of the heat transfer medium (gas, combustion products, etc.), separated from the inner space of the reactor **1**, contains in the embodiment of reactor **1** shown in Fig. 1a a lower chamber **31** (see Fig. 1b), which is connected to the inlet **30** of the heat transfer medium, which is arranged in the lower section of the reactor **1**, a hollow casing **32** of the reaction space **320** (see Fig. 1c), which is connected to the lower chamber **31**, and an upper chamber **33** (Fig. 1d), which is connected to the holllow casing **32** of the reaction space **320** and which is connected to the outlet **34** of the heat transfer medium, which is arranged in the upper section of the reactor **1**. Referring to the embodiment shown in Fig. 2a, the duct **3** of the heat transfer medium, separated from the inner space of the reactor, contains only the lower chamber **31** (see Fig. 2b), which is connected to the inlet **30** of the heat transfer medium, and the hollow casing **32** of the reaction space **320** (see Fig. 2c), connected with the lower chamber **31** and the outlet **34** of the heat transfer medium. The upper chamber **33** (see Fig. 2d) is at least partially mounted in the reaction space **320** without being connected to its hollow casing **32,** and so it does not have to be separated from the inner space of the reactor, since the heat transfer medium is not led into it. However, in an not shown example of embodiment even in this position the upper chamber **33,** may be connected with the hollow casing **32** of the reaction space **320** and/or with the upper chamber **31** and/or independently with the source of the heat transfer medium, thus forming a part of or an autonomous duct **3** of the heat transfer medium.

The lower chamber **31** is in both shown embodiments composed of hollow cylindrical chamber, which is in the inner space of the reactor **1** arranged coaxially with its casing **2**, whereby its upper section **310** is shaped upwards to the shape of surface of a cone **311** with an apical angle of 90° - nevertheless, in other not shown embodiments the apical angle can be any other size and/or the cone **311** may be created without an apex, e.g. as a truncated cone or a truncated cone with skew upper base, etc. Arranged in the inner space of the lower chamber **31** opposite the inlet **30** of the heat transfer medium is preferably arranged a partition **312,** which deflects the supplied heat transfer medium towards its skew surface - in the particular example of embodiment into its conic portion. The lower chamber **31** is by the duct **3132** connected with the hollow casing **32** of the reaction space **320** arranged above it, whereby the duct **3132** may exit especially from the conic portion of the lower chamber **31** (the embodiment shown in Fig. 1a) or from its cylindrical portion (the embodiemnt shown in Fig. 2a), or, as the case may be, from elsewhere.

In other not shown embodiments the lower chamber **31** may be created in principle in any other way, the only requirement being that it has to contain at least one heated skew and/or curved surface facing at least partially towards the outlet of the solid bulk organic waste from the reaction space **320.** The hollow casing **32** of the reaction space **320** is composed of a hollow cylindrical body arranged in the inner space of the reactor **1** coaxially with its casing **2**, around the cylindrical reaction space **320.** In the inner space of the hollow casing **32** of the reaction space **320** by a system of partitions **321** of a suitable shape and size, the duct of the heat transfer medium is created, which is shaped, for example, as an ascending coil in the advantageous embodiment shown in Fig. 1c and 2c, although in other not shown embodiments it can have any other shape, which ensures maximum possible exchange of heat between the heat transfer medium led into the inner space of the hollow casing **32** of the reaction space **320** and the reaction space **320.** The upper wall **322** of the hollow casing **32** of the reaction space **320** is in the embodiment shown in Fig. 1a, or 1c skewed towards its centre, or to the inlet into the reaction space **320** of the reactor **1** with an apical angle of 105°. However, in other not shown embodiments this apical angle can be in essence of any other suitable size, which ensures that the solid bulk organic waste falling on this wall **322** is shifted to the reaction space **320,** or, as the case may be, the wall **322** can be at least partially curved. The hollow casing **32** of the reaction space **320** is then by the duct **3233** connected to the upper chamber **33,** arranged above it, whereby this duct **3233** may exit, for example, from its upper skewed wall **322** (enbodiment shown in Fig. 1a), from its inner wall, or from elsewhere.

In other not shown embodiments the hollow casing **32** of the reaction space **320** may have any other shape, the only requirement being that it has to contain a hollow space (the reaction space **320**), whose circumferential wall is on the maximum possible part of its surface heated by the heat transfer medium led into the hollow casing **32.**

The space **3220** between the outer wall of the hollow casing **32** of the reaction space **320** and the inner wall of the casing **2** of the reactor **1** (if it is created for construction or technological reasons) is preferably at least on its lower side blinded and/or at least partially filled with suitable material, so that the gas and steam products of pyrolysis formed in the space under it can be directed only or preferably to the reaction space **320.** Suitable material to fill the space is material with good insulating properties and also fire resisting material, such as for example ceramic cotton wool.

In the embodiment shown in Fig. 1 the upper chamber **33** is formed by a hollow cylindrical chamber (see Fig. 1d), which is arranged coaxially with its casing **2** in the inner space of the reactor **1**, wherein its upper section **330** is shaped upwards to the shape ofsurface of a cone **331** with an apical angle of 60°, and its lower section **332** is shaped downwards to the shape of surface of a truncated cone **333** having the same apical angle. In other not shown embodiments, however, the apical angle of at least one of its parts can have different size and/or the upper cone **331** may be created without an apex, e.g. as truncated cone or with skew upper base, or the lower cone **333** may be created with an apex, or may be composed of truncated cone with skew base, etc. In the inner space of the upper chamber **33** opposite the end of the duct **3233** is preferably arranged a partition **334,** which deflects the supplied heat transfer medium to its skew and/or the curved surface facing towards the feeder **6** of the solid bulk organic waste - in the shown embodiment into its upper conic portion. The upper chamber **33** is by the duct **3334** connected with the outlet **34** of the heat transfer medium from the inner space of the reactor **1.** This duct **3334** may exit especially from its lower conic portion (embodiment shown in Fig. 1a), from the upper conic portion, or from another part.

In the embodiment shown in Fig. 2a around the lower section **332** of the upper chamber **33,** which is shaped as a conical surface **333,** along its entire height or at least its part there is arranged a funnel **35** of bulk organic waste composed of a duct in the shape of surface of truncated cone. Preferably, its apical angle is identical with the apical angle of the cone **333** of the lower section **332** of the upper chamber **33,** nevertheless in other alternatives there may be in principle any other apical angle, especially greater, to ensure smooth passage of the solid bulk organic waste. To the apex of the lower section **332** of the upper chamber **33** is further mounted a deflector **36** of flow of the steam and gas products of pyrolysis, which is in the shown embodiment formed by a solid body of a disc shape, whose upper wall **360** is shaped in the direction upwards as a conical surface **3601** with an apical angle of 90°, or, as the case may be, any other angle, and whose lower wall **361** is in the direction downwards curved. However, in other not shown embodiments the deflector **36** of the flow of the steam and gas products of pyrolysis is composed of at least one stationary or movable body, which has a different shape and/or is arranged elsewhere in proximity of the outlet of the funnel **35.** In an not shown embodiment the deflector **36** may be formed by blades mounted on the surface of the upper chamber **33** and/or the hollow casing **32** of the reaction space **320** and/or in the space between them. Another difference in comparison with the embodiment shown in Fig.1 a is the shape of the upper wall **322** of the hollow casing **32** of the reaction space **320,** which is in this embodiment flat, and the location of the upper chamber **33,** which is at least partially, or as whole arranged in the upper part of the hollow casing **32** of the reaction space **320** of the reactor **1** broaden for this purpose, as well as the fact that to the outlet **34** of the heat transfer medium from the reactor **1** is connected hollow casing **32** of the reaction space **320.** In an not shown example of embodiment the upper wall **322** of the hollow casing **32** of the reaction space **320** may be created as skewed and/or curved towards the inlet to the reaction space **320.** In another not shown embodiment in the upper section of the reaction space **320** the inner wall of the hollow casing **32** may be skewed and/or curved towards its centre and follow the shape of the upper chamber **33** better or more tightly.

Generally, the upper chamber **33** can be of any other shape, the only requirement being that it has to contain at least one heated skew and/or curved surface facing at least partially towards the feeder **6** of the solid bulk organic waste.

Taking into account all the facts mentioned above, it is apparent to a person skilled in the art that the individual elements of the reactor **1**, especially the duct **3** of the heat transfer medium or its part can be designed and mutually arranged in any other manner. For example, one of these elements can be placed in the inner space of the reactor **1** non-coaxially with its casing **2** and/or with the other elements of the duct **3** of the heat transfer medium separated from the inner space of the reactor **1**, or it can have any cross section other than circular - e.g. triangular, quadrangular or multiangular (regulat or irregular). In each variant of embodiment, however, the upper chamber **33** and the lower chamber **31** must have at least one heated skew and/or curved surface facing towards the feeder **6** of solid bulk organic waste, so that the solid bulk organic waste could move on it by gravity and at the same time could form a thin layer. These skew and/or curved surfaces can be provided with suitable not shown guide elements, such as. grooves and/or guide rails and/or other protrusions, which adjust the movement of the layer of the solid bulk organic waste, and/or can be composed of at least two different skew and/or curved surfaces differing in length and/or in the extent of the skew and/or curve - if they are formed by a conical surface, any of them can contain at least two sections with different apical angle, including zero angle, etc. Moreover, the skew surface may be formed by two skew walls, which together create a blade, or between which there is arranged a flat surface or any three-dimensional surface. In each section of the duct **3** of the heat transfer medium, which is separated from the inner space of the reactor **1**, at least one means of deflection of the supplied heat transfer medium can be created, for example, towards one of its walls, especially towards the wall with skew and/or curved surface. As such means it is possible to use e.g. a plane partition **312, 321, 334,** a partition shaped in space, an aperture, a rib, a blade/blades or another suitable means, provided with an orifice/orifices, if needed.

In other not shown embodiments individual parts of the duct **3** of the heat transfer medium are connected outside the reactor **1**, or each of them, or at least any combination of at least two of them is connected to the source of the heat transfer medium independently, and so it forms an independent duct **3** of the heat transfer medium, separated from the inner space of the reactor **1**.

The duct **3** of the heat transfer medium or at least parts of it are preferably made of material with high coefficient of heat transfer, such as cast irons, stainless steels, etc.

During the operation of the reactor **1** according to the invention, or during the process of pyrolysis of solid bulk organic waste according to the invention, heated heat transfer medium (gas, combustion products, etc.) is led into the duct **3** of the heat transfer medium, which is separated from the inner space of the reactor **1**, and heats the walls of the lower chamber **31**, the hollow casing **32** of the reaction space **320** and of the upper chamber **33** (in the case of the embodiment shown in Fig. 2a indirectly). At the same time, through the feeder **6** of solid bulk organic waste to the inner space of the reactor **1** solid organic waste is supplied, especially sewage sludge and sludge from biogas plants, etc., transformed during previous drying and crushing/grinding into bulk material. Subsequently, this solid bulk organic waste falls due to gravity onto the skew surface of the upper chamber **33 -** in the shown embodiment on the apex and/or in its proximity of the upper cone **331,** and moves on this surface downwards, whereby forms relatively thin layer, whose thickness gradually becomes smaller due to the movement and the growing size of the skew surface. This results in effective heat transfer from the heating medium through the upper wall **33** of the upper chamber to the solid bulk organic waste whose whole volume is well heated, wherein upon exceeding the limit of thermal stability of the organic compounds contained in it, these compounds are decomposed into stable low-molecular steam and gas product and a solid residue - i.e. pyrolysis takes place. After overfall of the solid bulk organic waste over the edge of the skew surface of the upper chamber **33,** this solid bulk organic waste falls according to the construction and/or mutual positioning of the upper chamber **33** and the hollow casing **32** of the reaction space **320** onto the upper wall **322** of the hollow casing **32** of the reaction space **320** and is directed by its shape to the reaction space **320,** or it falls directly to the reaction space **320.** Due to the construction of the hollow casing **32** it is exposed to the highest heat and therefore here the most intensive pyrolysis takes place. The rest of the solid bulk organic waste then falls through the reaction space **320** onto the skew surface of the lower chamber **33 -** in the shown embodiment on the apex or in its proximity of the upper cone **311.** It moves again on the skew surface downwards and simultaneously forms relatively thin layer, whose thickness gradually becomes smaller due to the movement and the growing size of the skew surface. Hereat its final pyrolysis takes place, during which organic compounds, whose pyrolysis has not taken place yet or has not been completely finished, are released. The steam and gas products of pyrolysis pass through the whole casing **2** of the reactor **1** towards the outlet **5** of the steam and gas products of pyrolysis and in the reaction space **320** of the reactor **1** get into contact with the falling particles of the solid bulk organic waste, the fall of which is decelerated by their counter-movement and thus the period of their presence in the reaction space **320** is prolonged, by which means they increase the efficiency of their pyrolysis here.

During the operation of the reactor **1** in the embodiment shown in Fig. 2a the solid bulk organic waste after its overfall from the upper wall **330** of the upper chamber **33** is directed to the reaction space **320** by the duct **35** of the solid bulk organic waste. Its solid residues then fall from the reaction space **320** on the upper wall **310** of the lower chamber **31.** The deflector **36** of the flow of the steam and gas products of pyrolysis prevents the steam and gas products of pyrolysis from intrusion into the duct **35** of the solid bulk organic waste, since these products would decelerate the movement of the material, and so they pass by the upper chamber **33** through the broaden portion of the reaction space **320** and are directed to the outlet **5** of the steam and gas products of pyrolysis, through which they are led away from the reactor **1**.

After exiting from the reactor **1** these gas and steam products of pyrolysis are led to an not shown cooling system, where they are condensed, or their components being liquid and gaseous under the set conditions are separated. Both types of these components are due to their composition combustible, and so they can be used as fuel e.g. for producing electric and/or thermal energy. In addition, part of them and/or their waste heat can be used also for pre-heating and/or pre-drying of the solid organic waste before it enters the reactor **1** and/or after that, or for producing electric energy necessary for the operation of the reactor **1** and its service elements. As a result, the operation of the reactor **1** according to the invention is energetically self- sufficient.

Solid products of the pyrolysis, which include mostly ash, cinder or incombustible impurities of solid organic waste, such as sand, stones, etc., then fall to the lower section of the reactor **1** and due to its shape they are directed to the outlet **4** of solid particles. From there they are continuously taken to a dump, or to further processing or utilization.

The advantage of the reactor **1** for the pyrolysis of the solid bulk organic waste according to the invention is that gas and steam products of pyrolysis do not get into contact with the heat transfer medium, and so they are not blended or polluted, and so they can be combusted immediately. Another indispensable advantage is that during the process of pyrolysis all microorganisms or higher organisms contained in solid organic waste, such as in sewage sludge, sludge from biogas plants or in other similar materials, are completely destroyed, and therefore solid residues of pyrolysis in this respect do not constitute a hazard to the environment.

When using the reactor **1** according to the invention pyrolysis runs at temperatures in the range of approximately 450 - 650°C, nevertheless the construction of the reactor **1** enables pyrolysis to be performed at even higher temperatures, if for some reason it is needed.

For carrying out the pyrolysis of solid bulk organic waste according to the invention also different construction of the reactor than the embodiments shown in Fig. 1a and 2a can be used, whereby required minimum is reactor **1**, which contains the duct **3** of the heat transfer medium, separated from the inner space of the reactor **1**, formed by minimum heated hollow casing **32** of the reaction space **320.** However, it is advantageous if after exiting from the reaction space **320** solid residues of the solid bulk organic waste separate, forming a thin layer on heated skew surface, since steam and gas products of pyrolysis, which are released from this layer, create a counter flow in the reaction space **320** and decelerate there the movement of the solid bulk organic waste, by which means they contribute to more effective pyrolysis. However, according to conducted experiments the most effective arrangement seems to be that with the upper chamber **33** placed in a direction of the movement of the solid bulk organic waste in the reactor **1** in front of the reaction space **320.** On the skew surface of the upper chamber **32** the solid bulk organic waste is pre-heated and its pyrolysis starts, and, consequently, the pyrolysis taking place in the reaction space is faster and more thorough.

### List of references

- 1: reactor
- 2: casing of the reactor
- 20: longitudinal axis of the casing of the reactor
- 3: duct of the heat transfer medium
- 30: inlet of the heat transfer medium
- 31: lower chamber
- 310: upper section of the lower chamber
- 311: conical surface
- 312: partition of the upper chamber
- 3132: duct
- 32: hollow casing of the reaction space
- 320: reaction space
- 321: partition of the hollow casing of the reaction space
- 322: upper wall of the hollow casing of the reaction space
- 3220: space between the outer wall of the hollow casing of the reaction space and the inner space of the casing of the reactor
- 3233: duct
- 33: upper chamber
- 330: upper section of the upper chamber
- 331: conical surface
- 332: lower section of the upper chamber
- 333: surface of truncated cone
- 3334: duct
- 334: partition of the upper chamber
- 34: outlet of the heat transfer medium
- 35: funnel of solid bulk organic waste
- 36: deflector of steam and gas products of pyrolysis
- 360: upper wall of the deflector of steam and gas products of pyrolysis
- 3601: conical surface
- 361: lower wall of the deflector of steam and gas products of pyrolysis
- 4: outlet of solid products of pyrolysis
- 40: conic hopper
- 5: outlet of steam and gas products of pyrolysis
- 6: feeder of solid bulk organic waste
- 60: feeder duct
- 61: vertical section of the feeder duct
- 62: overfall

## Claims

1. A method of pyrolysis (thermal decomposition) of solid bulk organic waste, especially sewage sludge and sludge from biogas station in a reactor (1), wherein
the solid bulk organic waste is fed to the reaction space (320) of the reactor (1), around which a heated hollow casing (32) of the reaction space (320) is arranged in the inner space of the reactor (1), which forms the duct (3) of the heat transfer medium, separated from the inner space of the reactor (1), and during passage of the solid bulk organic waste through this reaction space (320) its pyrolysis takes place, whereby the solid bulk organic waste and solid products of pyrolysis come-out from the reaction space (320) by the action of gravity into the inner space of the reactor (1) below the reaction space (320), while its movement throught the reaction space (320) is decelerated by a counter flow of the steam and gas product of the pyrolysis coming through the reaction space (320).

2. The method of pyrolysis according to Claim 1, **characterized in that** the solid bulk organic waste, prior to being led to the reaction space (320) of the reactor (1) is delivered to the skew and/or curved heated surface, on which it forms a moving layer and on which it is preheated and its partial pyrolysis takes place.

3. The method of pyrolysis according to Claim 1 or 2, **characterized in that** the solid bulk organic waste is after exiting from the reaction space (320) delivered to a skew and/or curved heated surface, on which it forms a moving layer and on which its final pyrolysis takes place.

4. The method of pyrolysis according to Claim 3, **characterized in that** the steam and gas products of the final pyrolysis of the solid bulk organic waste enter the reaction space (320) of the reactor (1).

5. A reactor (1) for pyrolysis of solid bulk organic waste, especially sewage sludge and sludge from biogas plant, wherein in its inner space a reaction space is created (320), around which in the inner space of the reactor (1) a heated hollow casing (32) of the reaction space (320) is arranged, which is connected with the inlet (30) of the heat transfer medium to the reactor (1) and with the outlet (34) of the heat transfer medium from the reactor (1), and which is separated from the inner space of the reactor (1).

6. The reactor (1) according to Claim 5, **characterized in that** in a direction of the movement of the solid bulk organic waste in the inner space of the reactor (1) behind the reaction space (320) there is arranged a lower chamber (31), which contains at least one heated skew and/or curved surface facing at least partially towards the outlet of the solid bulk organic waste from the reaction space (320) and which is connected to the inlet (30) of the heat transfer medium to the reactor (1) and to the outlet (34) of the heat transfer medium from the reactor (1) and/or it is connected to the inlet (30) of the heat transfer medium to the reactor (1) and/or to the outlet (34) of the heat transfer medium from the reactor (1) via the hollow casing (32) of the reaction space (320), the lower chamber (31) being separated from the inner space of the reactor (1).

7. The reactor (1) according to Claim 6, **characterized in that** the heated skew and/or curved surface of the lower chamber (31) is formed by a surface in a shape of conical surface (331), a surface of truncated cone or of truncated cone with skew upper base.

8. The reactor (1) according to any of Claims 5 to 7, **characterized in that** in a direction of the movement of the solid bulk organic waste in the inner space of the reactor (1) in front of the reaction space (32) is arranged an upper chamber (33), which contains at least one heated skew and/or curved surface facing at least partially towards the feeder (6) of the solid bulk organic waste to the inner space of the reactor (1) and which is connected to the outlet (34) of the heat transfer medium from the reactor (1) and to the inlet (30) of the heat transfer medium to the reactor (1) and/or it is connected to the inlet (30) of the heat transfer medium to the reactor (1) and/or to the inlet (34) of the heat transfer medium from the reactor (1) via the hollow casing (32) of the reaction space (320) and/or of the lower chamber (31), the upper chamber (33) being separated from the inner space of the reactor (1).

9. The reactor (1) according to Claim 8, **characterized in that** the heated skew and/or curved surface of the upper chamber (33) is formed by a surface in a shape of conical surface (331), a surface of truncated cone or of truncated cone with skew upper base.

10. The reactor (1) according to any of the Claims 5 to 7, **characterized in that** in the reaction space (320) of the reactor (1) is at least partially arranged an upper chamber (33), which contains at least one heated skew and/or curved surface facing at least partially towards the feeder (6) of the solid bulk organic waste into the inner space of the reactor (1).

11. The reactor (1) according to Claim 10, **characterized in that** the heated skew and/or curved surface of the upper chamber (33) is formed by a surface in a shape of conical surface (331), a surface of truncated cone or of truncated cone with a skew upper base.

12. The reactor (1) according to Claim 10 or 11, **characterized in that** the upper chamber (33) is connected to the outlet (34) of the heat transfer medium from the reactor (1) and to the inlet (30) of the heat transfer medium to the reactor (1), and/or the upper chamber (33) is connected to the inlet (30) of the heat transfer medium to the reactor (1) and/or to the outlet (34) of the heat transfer medium from the reactor (1) via the hollow casing (32) of the reaction space (320) and/or via the lower chamber (31), the upper chamber (33) being separated from the inner spece of the reactor (1).

13. The reactor (1) according to any of Claims 10 to 12, **characterized in that** around at least a part of the height of the upper chamber (33) is arranged a funnel (35) of the solid bulk organic waste, at whose outlet is arranged a deflector (36) of the flow of the steam and gas products of pyrolysis, which prevents the steam and gas products of pyrolysis from entering the funnel (35) of the solid bulk organic waste.

14. The reactor (1) according to any of the preceding claims, **characterized in that** the space (3220) between the outer wall of the hollow casing (32) of the reaction space (320) and the inner wall of the casing (2) of the reactor (1) is at least partially blinded and/or filled with a heat-insulating material.

## Patentansprüche

1. Verfahren zur Pyrolyse (Wärmezerlegung) eines festen, lockeren, organischen Abfalls, insbesondere eines Abwasserschlamms und eines Schlamms aus der Biogasstation im Reaktor (1), wobei der feste, lockere, organische Abfall dem Reaktionsraum (320) des Reaktors (1) zugeführt wird, um den herum in dem inneren Raum des Reaktors (1) ein beheizter Hohlmantel (32) des Reaktionsraumes (320) angeordnet ist, der eine Leitung (3) eines wärmetragenden Mediums bildet, die von dem inneren Raum des Reaktors (1) getrennt ist, und es beim Durchgang des festen, lockeren, organischen Abfalls durch diesen Reaktionsraum (320) zu seiner Pyrolyse kommt, wobei der feste, lockere, organische Abfall und die festen Pyrolysenprodukte aus dem Reaktionsraum (320) durch die Schwerkraftwirkung in den inneren Raum des Reaktors (1) unter den Reaktionsraum (320) ausgehen und ihre Bewegung durch den Reaktionsraum (320) durch den Gegenstrom der Dampfgasprodukte der Pyrolyse verlangsamt wird, die aus dem Reaktionsraum (320) ausgehen.

2. Verfahren zur Pyrolyse nach dem Anspruch 1, **dadurch gekennzeichnet, dass** der feste, lockere, organische Abfall vor der Zuführung in den Reaktionsraum (320) des Reaktors (1) auf eine schräge und/oder gerundete beheizte Fläche zugeführt wird, auf der er eine sich bewegende Schicht bildet, und auf der er vorgewärmt wird und es zu seiner teilweisen Pyrolyse kommt.

3. Verfahren zur Pyrolyse nach dem Anspruch 1 oder 2, **dadurch gekennzeichnet, dass** der feste, lockere, organische Abfall nach dem Ausgang aus dem Reaktionsraum (320) auf eine schräge und/oder gerundete beheizte Fläche zugeführt wird, auf der er eine sich bewegende Schicht bildet, und auf der es zu seiner finalen Pyrolyse kommt.

4. Verfahren zur Pyrolyse nach dem Anspruch 3, **dadurch gekennzeichnet, dass** die Dampfgasprodukte der finalen Pyrolyse des festen, lockeren, organischen Abfalls in den Reaktionsraum (320) des Reaktors (1) eintreten.

5. Reaktor (1) für die Pyrolyse eines festen, lockeren, organischen Abfalls, insbesondere eines Abwasserschlammes und eines Schlamms aus der Biogasstation, wobei in seinem inneren Raum ein Reaktionsraum (320) gebildet wird, um den herum in dem inneren Raum des Reaktors (1) ein beheizter Hohlmantel (32) des Reaktionsraumes (320) angeordnet ist, der mit dem Eingang (30) des wärmetragenden Mediums in den Reaktor (1) und mit dem Ausgang (34) des wärmetragenden Mediums aus dem Reaktor (1) verbunden ist und der von dem inneren Raum des Reaktors (1) getrennt ist.

6. Reaktor (1) nach dem Anspruch 5, **dadurch gekennzeichnet, dass** in der Richtung der Bewegung des festen, lockeren, organischen Abfalls in dem inneren Raum des Reaktors (1) hinter dem Reaktionsraum (320) eine untere Kammer (31) angeordnet ist, die mindestens eine beheizte schräge und/oder gerundete Fläche aufweist, die mindestens teilweise dem Ausgang des festen, lockeren, organischen Abfalls aus dem Reaktionsraum (320) zugewandt ist und die mit dem Eingang (30) des wärmetragenden Mediums in den Reaktor (1) und mit dem Ausgang (34) des wärmetragenden Mediums aus dem Reaktor (1) verbunden ist, und/oder die mit dem Eingang (30) des wärmetragenden Mediums in den Reaktor (1) und/oder mit dem Ausgang (34) des wärmetragenden Mediums aus dem Reaktor (1) mittels eines Hohlmantels (32) des Reaktionsraumes (320) verkoppelt ist und die zugleich von dem inneren Raum des Reaktors (1) getrennt ist.

7. Reaktor (1) nach dem Anspruch 6, **dadurch gekennzeichnet, dass** die beheizte schräge und/oder gerundete Fläche der unteren Kammer (31) durch die Oberfläche in der Form eines Kegelmantels (311), eines Kegelstumpfes oder eines Kegelstumpfes mit schräger oberer Grundfläche gebildet wird.

8. Reaktor (1) nach einem der Ansprüche 5 bis 7, **dadurch gekennzeichnet, dass** in der Richtung der Bewegung des festen, lockeren, organischen Abfalls in dem inneren Raum des Reaktors (1) vor dem Reaktionsraum (320) eine obere Kammer (33) angeordnet ist, die mindestens eine beheizte schräge und/oder gerundete Fläche aufweist, die mindestens teilweise der Zuführung (6) des festen, lockeren, organischen Abfalls in den inneren Raum des Reaktors (1) zugewandt ist und die mit dem Ausgang (34) des wärmetragenden Mediums aus dem Reaktor (1) und mit dem Eingang (30) des wärmetragenden Mediums in den Reaktor (1) verbunden ist, und/oder die mit dem Eingang (30) des wärmetragenden Mediums in den Reaktor (1) und/oder mit dem Ausgang (34) des wärmetragenden Mediums aus dem Reaktor (1) mittels eines Hohlmantels (32) des Reaktionsraumes (320) und/oder der unteren Kammer (31) verkoppelt ist und die zugleich von dem inneren Raum des Reaktors (1) getrennt ist.

9. Reaktor (1) nach dem Anspruch 8, **dadurch gekennzeichnet, dass** die beheizte schräge und/oder gerundete Fläche der oberen Kammer (33) durch die Oberfläche in der Form eines Kegelmantels (311), eines Kegelstumpfes oder eines Kegelstumpfes mit schräger oberer Grundfläche gebildet wird.

10. Reaktor (1) nach einem der Ansprüche 5 bis 7, **dadurch gekennzeichnet, dass** in dem Reaktionsraum (320) des Reaktors (1) mindestens teilweise obere Kammer (33) gelagert ist, die mindestens eine beheizte schräge und/oder gerundete Fläche aufweist, die mindestens teilweise der Zuführung (6) des festen, lockeren, organischen Abfalls in den inneren Raum des Reaktors (1) zugewandt ist.

11. Reaktor (1) nach dem Anspruch 10, **dadurch gekennzeichnet, dass** die beheizte schräge und/oder gerundete Fläche der oberen Kammer (33) durch die Oberfläche in der Form eines Kegelmantels (311), eines Kegelstumpfes oder eines Kegelstumpfes mit schräger oberer Grundfläche gebildet wird.

12. Reaktor (1) nach dem Anspruch 10 oder 11, **dadurch gekennzeichnet, dass** die obere Kammer (33) mit dem Ausgang (34) des wärmetragenden Mediums aus dem Reaktor (1) und mit dem Eingang (30) des wärmetragenden Mediums in den Reaktor (1) verkoppelt ist und/oder die mit dem Eingang (30) des wärmetragenden Mediums in den Reaktor (1) und/oder mit dem Ausgang (34) des wärmetragenden Mediums aus dem Reaktor (1) mittels eines Hohlmantels (32) des Reaktionsraumes (320) und/oder der unteren Kammer (31) verkoppelt ist und zugleich von dem inneren Raum des Reaktors (1) getrennt ist.

13. Reaktor (1) nach einem der Ansprüche 10 bis 12, **dadurch gekennzeichnet, dass** um mindestens einen Teil der Höhe der oberen Kammer (33) herum ein Gleichrichter (35) des festen, lockeren, organischen Abfalls gelagert ist, an dessen Ausgangsende ein Störkörper (36) des Stromes der Dampfgaspyrolysenprodukte angeordnet ist, der an dem Eingang der Dampfgaspyrolysenprodukte in den Gleichrichter (35) des festen, lockeren, organischen Abfalles hindert.

14. Reaktor (1) nach einem der vorangehenden Ansprüche, **dadurch gekennzeichnet, dass** der Raum (3220) zwischen der äußeren Wand des Hohlraumes (32) des Reaktionsraumes (320) und der inneren Wand des Mantels (2) des Reaktors (1) mindestens teilweise geblendet und/oder mit einem Wärmedämmstoff ausgefüllt ist.

## Revendications

1. Procédé de la pyrolyse (de la décomposition thermique) des déchets organiques solides friables, notamment des boues d'épuration et des boues de la station de biogaz dans un réacteur (1), tandis que les déchets organiques solides friables sont introduits dans l'espace de la réaction (320) du réacteur (1), autour de laquelle à l'intérieur du réacteur (1) est disposée l'enveloppe creuse chauffée (32) de l'espace de la réaction (320) qui forme le conduit (3) du moyen thermogène, qui est séparé de l'espace intérieur du réacteur (1), et lors du passage des déchets organiques solides friables par cet espace de la réaction (320) conduit à leur pyrolyse, tandis que les déchets organiques solides friables et les produits de pyrolyse solides passent hors de l'espace de la réaction (320) et par la force de la gravité ils passent dans l'intérieur du réacteur (1) au-dessous de l'espace de la réaction (320) et leur mouvement par l'espace de la réaction (320) est ralenti par le contrecourant des produits vapeur-gaz de pyrolyse qui sortent de l'espace de la réaction (320).

2. Procédé de la pyrolyse selon la revendication 1, **caractérisé en ce que** les déchets organiques solides friables avant l'introduction dans l'espace de la réaction (320) du réacteur (1) sont introduits à une surface chauffée inclinée et / ou incurvée, et qui y forment une couche mouvante et qui sont préchauffés et conduits à leur pyrolyse partielle.

3. Procédé de la pyrolyse selon la revendication 1 ou 2, **caractérisé en ce que** les déchets organiques solides friables, après avoir quitté l'espace de la réaction (320) sont amenés à une surface chauffée inclinée et / ou incurvée sur laquelle ils forment une couche mobile et sur laquelle leur pyrolyse finale se réalise.

4. Procédé de la pyrolyse selon la revendication 3, **caractérisé en ce que** les produits gaz-vapeur de la pyrolyse finale des déchets organiques solides friables entrent dans l'espace de la réaction (320) du réacteur (1).

5. Réacteur (1) pour la pyrolyse des déchets organiques solides friables, notamment des boues d'épuration et des boues de la station de biogaz tandis que dans son espace intérieur est formé l'espace de la réaction (320) autour duquel est à l'intérieur du réacteur (1) disposée l'enveloppe creuse chauffée (32) de l'espace de la réaction (320) qui est reliée avec l'entrée (30) du moyen thermogène, dans le réacteur (1) et avec la sortie (34) du moyen thermogène du réacteur (1) et qui est séparé de l'espace interne du réacteur (1).

6. Réacteur (1) selon la revendication 5, **caractérisé en ce que,** dans la direction du éplacement des déchets organiques solides friables à l'intérieur du réacteur (1) il y a derrière l'espace de la réaction (320) la chambre inférieure disposée (31) qui comprend au moins une surface chauffée inclinée et / ou incurvée faisant face au moins partiellement à la sortie des déchets organiques solides friables de l'espace de la réaction (320) et qui est reliée avec l'entrée (30) du moyen du transfert de la chaleur dans le réacteur (1) et avec la sortie (34) du moyen thermogène du réacteur (1), et / ou avec l'entrée (30) du moyen thermogène dans le réacteur (1) et / ou avec la sortie (34) du moyen thermogène du réacteur (1) est reliée par l'intermédiaire de l'enveloppe creuse chauffée (32) de l'espace de la réaction (320) et qui est en même temps séparée de l'espace intérieur du réacteur (1).

7. Réacteur (1) selon la revendication 6, **caractérisé en ce que** la surface chauffée inclinée et / ou incurvée de la chambre inférieure (31) est formée par la surface du cône (311), du cône tronqué ou d'un cône tronqué avec une base supérieure inclinée.

8. Réacteur (1) selon l'une quelconque des revendications 5-7, **caractérisé en ce que,** dans la direction du déplacement des déchets organiques solides friables à l'intérieur du réacteur (1) avant l'espace de la réaction (32) il y a la chambre supérieure disposée (33) qui comprend au moins une surface chauffée inclinée et / ou incurvée faisant face au moins partiellement à l'entrée (6) des déchets organiques solides friables à l'intérieur du réacteur (1) et qui est reliée avec la sortie (34) du moyen thermogène du réacteur (1) et avec l'entrée (30) du moyen thermogène dans le réacteur (1) et / ou avec l'entrée (30) du moyen thermogène dans le réacteur (1) et / ou avec la sortie (34) du moyen thermogène du réacteur (1) elle est reliée par l'intermédiaire de l'enveloppe creuse (32) de l'espace de la réaction (320), et / ou par l'intermédiaire de la chambre inférieure (31) et qui est en même temps séparée de l'espace intérieur du réacteur (1).

9. Réacteur (1) selon la revendication 8, **caractérisé en ce que** la surface chauffée inclinée et / ou incurvée de la chambre supérieure (33) est formée par la surface du cône (331), du cône tronqué ou du cône tronqué avec une base supérieure inclinée.

10. Réacteur (1) selon l'une quelconque des revendications 5-7, **caractérisé en ce que** dans l'espace de la réaction (320) du réacteur (1) est au moins partiellement intégrée la chambre supérieure (33) qui comprend au moins une surface chauffée inclinée et / ou incurvée faisant face au moins partiellement à l'entrée (6) des déchets organiques solides friables à l'intérieur du réacteur (1).

11. Réacteur (1) selon la revendication 10, **caractérisé en ce que** la surface chauffée inclinée et / ou incurvée de la chambre supérieure (33) est formée par la surface du cône (331), du cône tronqué ou du cône tronqué avec une base supérieure inclinée.

12. Réacteur (1) selon la revendication 10 ou 11, **caractérisé en ce que** la chambre supérieure (33) est reliée avec la sortie (34) du moyen thermogène du réacteur (1) et avec l'entrée (30) du moyen thermogène dans le réacteur (1), et / ou avec l'entrée (30) du moyen du thermogène dans le réacteur (1) et / ou avec la sortie (34) du moyen thermogène du réacteur (1) est reliée par l'intermédiaire de l'enveloppe creuse (32) de l'espace de la réaction (320) et / ou la chambre inférieure (31), et en même temps elle est séparée de l'espace intérieur du réacteur (1).

13. Réacteur (1) selon l'une quelconque des revendications 10 à 12, **caractérisé en ce qu'**autour d'au moins une partie de la hauteur de la chambre supérieure (33) est agencé un redresseur (35) des déchets organiques solides friables, à l'extrémité de sa sortie est monté le déflecteur (36) du courant des produits gaz-vapeur de la pyrolyse, qui empêche l'entrée des produits gaz-vapeur de la pyrolyse dans le redresseur (35) des déchets organiques solides friables.

14. Réacteur (1) selon l'une quelconque des revendications précédentes, **caractérisé en ce que** l'espace (3220) entre la paroi extérieure de l'enveloppe creuse (32) de l'espace de la réaction (320) et la paroi intérieure du boîtier (2) du réacteur (1) est au moins partiellement aveuglé et / ou rempli d'un matériau thermiquement isolant.
